# EUROPÄISCHE PATENTSCHRIFT

(11) **EP 0 729 830 B1**
(45) Veröffentlichungstag und Bekanntmachung des Hinweises auf die Patenterteilung: **25.09.2002**
(21) Anmeldenummer: 96100448.8
(22) Anmeldetag: 13.01.1996
(51) Int. Cl.: B32B 27/08, B32B 1/08, F16L 11/04, F16L 9/12, C08L 77/00

(54) **Thermoplastische Mehrschichtverbunde**
Thermoplastic laminate
Stratifié thermoplastique

(30) Priorität: 01.03.1995 DE 19507026
(43) Veröffentlichungstag der Anmeldung: 04.09.1996
(73) Patentinhaber: Degussa AG, 40474 Düsseldorf (DE)
(72) Erfinder: Röber, Stefan, Dr., D-22453 Hamburg (DE); Ries, Hans, Dr., D-45772 Marl (DE)

(56) Entgegenhaltungen:
- EP-A- 0 464 561
- EP-A- 0 523 644
- EP-A- 0 618 390
- EP-A- 0 637 511
- EP-A- 0 649 738
- EP-A- 0 649 739
- EP-A- 0 650 004
- WO-A-94/25524

## Beschreibung

Gegenstand der Erfindung sind thermoplastische Mehrschichtverbunde mit mindestens je einer Schicht auf Basis eines Polyolefins, eines Polyamids und eines Polyvinylidenfluorids.

Polyolefine, Polyvinylidenfluorid und Polyamide sind jeweils für eine Reihe von Anwendungen ungeeignet.

Obwohl Polyamide grundsätzlich gute mechanische Eigenschaften, insbesondere gute Zähigkeit, aufweisen, haben sie für viele Anwendungen eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyvinylidenfluorid dagegen besitzt eine ausgezeichnete Sperrwirkung sowohl gegenüber polaren als auch unpolaren Stoffen. Nachteilig ist aber die Schlagempfindlichkeit; insbesondere die Kerbschlagzähigkeit ist nicht ausreichend.

Mehrschichtverbunde, die eine Funktionsschicht auf Basis von Polyamid und eine Sperrschicht auf Basis von Polyvinylidenfluorid besitzen, sind bekannt. Die EP-A-0 650 004 beschreibt ein mindestens fünfschichtiges Rohr, das von außen nach innen Schichten aus Polyamid, einem isocyanatmodifizierten Polyester, Polyamid, einem Blend aus Polyamid und einem Poly(alkyl)acrylsäureester sowie Polyvinylidenfluorid aufweist. Gegenstand der EP-A-0 618 390 ist ein Rohr mit der Schichtenfolge Polyamid/Blend aus Polyamid und Poly(alkyl)acrylsäureester/Polyvinylidenfluorid; bei der EP-A-0 649 739 und der WO-A-94 25 524 lautet die Schichtenfolge Polyamid/Blend aus Polyamid und Polyglutarimid/Polyvinylidenfluorid. Eine andere Lösung wird bei der EP-A-0 523 644 gewählt, wo eine Polyamidschicht und eine Fluorpolymerschicht durch einen Haftvermittler verbunden werden, der aus Polyamid und einem speziellen fluorhaltigen Pfropfcopolymer besteht. Ohne Haftvermittler kommen die Verbunde der EP-A-0 637 511 aus, wo eine Polyamidschicht auf einer Schicht aus Polyvinylidenfluorid haftet, welche zusätzlich Polyglutarimid enthält. Formmassen, die Polyglutarimid, Polyamid, ein Kautschuk-Pfropfcopolymer und ein Epoxidgruppen enthaltendes Copolymer enthalten, sind in der EP-A-0 464 561 beschrieben.

Polyolefine besitzen eine für eine Reihe von Anwendungen nicht ausreichende Sperrwirkung gegen Kraftstoffe. Dies führt beispielsweise dazu, daß wegen des weiterentwickelten Umweltbewußtseins und den entsprechenden Verschärfungen der gesetzlichen Regelungen einschichtige Polyolefinrohre zum Transport von Kraftstoffen, beispielsweise in untererdig verlegten Versorgungsleitungen im Tankstellenbereich, durch Rohre mit verbesserter Sperrwirkung ersetzt werden müssen. Ebenso müssen im Automobilbereich Tanks aus Polyolefinen gegen mehrschichtige Tanks mit einer oder mehreren Sperrschichten ausgetauscht werden, wobei die verschiedenen Schichten fest miteinander verbunden sein sollen. Allerdings sind Polyolefine gegenüber den vorgenannten Werkstoffen deutlich billiger; zudem ist die Verschweißbarkeit unproblematischer. Dies ist insbesondere bei Rohren und Leitungen aus Polyolefinen ein großer Vorteil.

Es ist dem Fachmann bekannt, daß die weitaus meisten Polymeren, so auch Polyamid, Polyolefine und Polyvinylidenfluorid, miteinander unverträglich sind, weshalb bei der Herstellung von Mehrschichtverbunden keine ausreichende Haftung zwischen den Laminatschichten erzielt wird. Ein kraftschlüssiger Verbund ist aber bei technischen Anwendungen unbedingt erforderlich.

Verbunde aus Polyamiden und Polyolefinen sind dem Fachmann bekannt. Als Haftvermittler werden eine Reihe von Produkten, beispielsweise BYNEL® von DuPont und ADMER® von Mitsui angeboten. Auch diese Verbunde sind für viele Anwendungen wegen der mangelnden Lackierbarkeit und Sperrwirkung nicht geeignet.

Aufgabe der vorliegenden Erfindung war es, einen lösemittel- und temperaturbeständigen Verbund zwischen Polyvinylidenfluorid und Polyolefinen zu schaffen, der unempfindlich gegenüber Scherbeanspruchung ist und gute mechanische Eigenschaften besitzt. Insbesondere soll eine sehr gute Schichtenhaftung erzielt werden. Der Verbund soll mittels Coextrusion sowie mittels Pressen herstellbar und mittels Blasformen, Verstrecken und Thermoformen unter Beibehaltung der guten Schichtenhaftung weiterverarbeitbar sein.

Diese Aufgabe wird gelöst durch einen thermoplastischen Mehrschichtverbund enthaltend mindestens
I. eine Schicht aus einer Polyvinylidenfluorid-Formmasse,
II. eine zur Schicht gemäß I. direkt benachbarte Schicht aus einer Formmasse auf Basis eines Gemisches aus
   a. Polyamid
      und
   b. Polyglutarimid,
III. eine Schicht aus einem geeigneten Haftvermittler, der reaktive Gruppen enthält und
IV. eine zur Schicht gemäß III. direkt benachbarte Schicht aus einer Polyolefin-Formmasse,
wobei benachbarte Schichten kraftschlüssig miteinander verbunden sind.

Die Schicht IV. kann auch mit der Schicht III. identisch sein.

Die Schicht gemäß I. enthält Polyvinylidenfluorid, welches bevorzugt weichmacherfrei eingesetzt wird. Herstellung und Struktur des Polymeren sind bekannt (Hans R. Kricheldorf, **Handbook of Polymer Synthesis**, Part A, Verlag Marcel Dekker Inc. New York - Basel - Hongkong, S. 191 f.; **Kunststoff-Handbuch,** 1. Auflage, Band XI, Carl Hanser Verlag München (1971), S. 403 ff.).

Es können erfindungsgemäß auch Polymere auf Basis von Polyvinylidenfluorid enthalten sein, die bis zu 40 Gew.-% andere Monomere aufweisen. Als solche zusätzlichen Monomeren seien beispielhaft genannt: Trifluorethylen, Ethylen, Propen und Hexafluorpropen.

Das erfindungsgemäß eingesetzte Polyvinylidenfluorid weist in der Regel einen Melt Flow-Index von < 17 g/10 min., vorzugsweise von 2 bis 13 g/10 min. (DIN 53 735) auf.

Für die Komponente II.a. kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12.12-sowie insbesondere 12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, **Die Kunststoffe und ihre Eigenschaften,** Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes,** S. 424-467; Interscience Publishers, New York (1977); DE-AS 21 52 194).

Ebenfalls geeignet als Polyamide sind gemischt aliphatisch/aromatische Polykondensate, wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology,** 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in den DE-OSS 27 12 987, 25 23 991 oder 30 06 961 beschrieben.

Das Molekulargewicht (Zahlenmittel) der Polyamide liegt oberhalb von 5 000, vorzugsweise oberhalb von 10 000, entsprechend einer relativen Viskosität (ηᵣₑₗ) im Vorzugsbereich von 1,65 bis 2,4.

Die Polyamide der Komponente II.a. können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates,** Interscience Publishers, New York (1981)], Acrylnitril/Styrol/Butadien- (Houben-Weyl, **Methoden der organischen Chemie,** Bd. 14/1, Georg Thieme Verlag Stuttgart, S. 393 - 406; **Ullmanns Encyclopädie der technischen Chemie,** 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisate (**Ull-manns Encyclopädie der technischen Chemie**, 4. Auflage, Bd. 19, Verlag Chemie Weinheim (1981), S. 273 ff.) oder Polyphenylenether (DE-OSS 32 24 691 und 32 24 692, US-PSS 3 306 874, 3 306 875 und 4 028 341) genannt.

Sofern erforderlich, können die Polyamide schlagzäh eingestellt werden. Geeignete Modifier sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien als schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Neben Polyamid als Komponente II.a. enthält die Schicht gemäß II. noch die Komponente II.b. Als Komponente II.b. werden Polyglutarimide eingesetzt, welche bevorzugt nachstehende Grundbausteine enthalten:
i) maximal 98,8 Gew.-%, vorzugsweise
   10 bis 60 Gew.-% 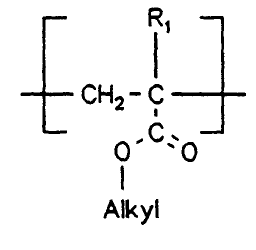
ii) maximal 98,8 Gew.-%, vorzugsweise
   30 bis 80 Gew.-% 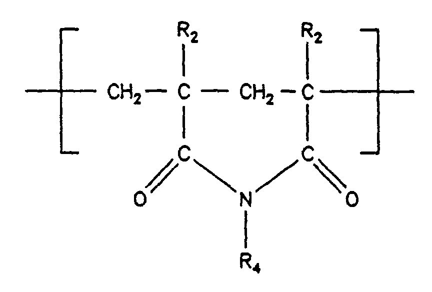
iii) < 20 Gew-%, vorzugsweise
   2 bis 10 Gew.-% 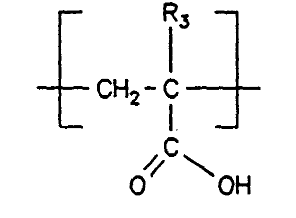
iv) 1,2 bis 20 Gew.-%, vorzugsweise
   1,5 bis 12 Gew.-%, insbesondere
   bevorzugt 2 bis 10 Gew.-%

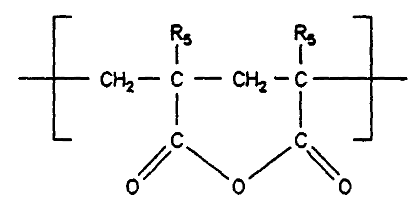

In den genannten Formeln bedeuten
Alkyl = Methyl, Ethyl, Propyl, Butyl, Pentyl, Hexyl;
R₁ bis R₅ = (CₙH₂ₙ₊₁) mit n = 0 bis 6,
wobei die Substituenten gleich oder verschieden sein können. Bevorzugt sind solche Grundbausteine, in denen Alkyl und R₁ bis R₅ einen Methylrest bedeuten.

Die genannten Polymeren der Komponente II.b. werden deswegen als Polyglutarimide bezeichnet, weil es sich um Poly(alkyl)acrylsäureester handelt, bei denen zwei benachbarte Carboxylatgruppen zu einem cyclischen Säureimid umgesetzt worden sind. Die Imidbildung wird bevorzugt mit Ammoniak bzw. primären Aminen, wie z. B. mit Methylamin, durchgeführt. Die Produkte sowie ihre Herstellung sind bekannt (Hans R. Kricheldorf, **Handbook of Polymer Synthesis,** Part A, Verlag Marcel Dekker Inc. New York - Basel - Hongkong, S. 223 f.; H. G. Elias, **Makromoleküle,** Hüthig und Wepf Verlag Basel - Heidelberg - New York; US-PSS 2 146 209, 4 246 374).

Die erfindungsgemäß eingesetzten Polyglutarimide weisen in der Regel einen Melt Flow-Index von < 30 g/10 min., vorzugsweise von 0,3 bis 15 g/10 min., auf.

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind gemäß dem Stand der Technik weitere Modifier möglich.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 230 und 330 °C.

Die Herstellung der Formmasse für die Schicht gemäß II. kann auch direkt in einem Speiseextruder, der zur Herstellung des thermoplastischen Mehrschichtverbunds in der verwendeten Coextrusionsanlage oder Spritzgußanlage eingesetzt ist, erfolgen, so daß die Formmasse für die Schicht gemäß II. direkt im Anschluß an ihre Herstellung - ohne weitere Zwischenlagerung - zu einer Schicht des thermoplastischen Mehrschichtverbunds verarbeitet werden kann.

Die Komponenten II.a. und II.b. werden im Gewichtsverhältnis 40 bis 90 : 60 bis 10, vorzugsweise 60 bis 80 : 40 bis 20, eingesetzt.

Beispielhaft für Polyolefine seien Polyethylen und Polypropylen genannt. Grundsätzlich kann hiervon jeder handelsübliche Typ eingesetzt werden. So kommen beispielsweise infrage: lineares Polyethylen hoher, mittlerer oder niedriger Dichte, LDPE, Ethylencopolymere mit kleineren Mengen (bis maximal circa 40 Gew.-%) an Comonomeren wie n-Butylacrylat, Methylmethacrylat, Maleinsäureanhydrid, Styrol, Vinylalkohol o. ä., isotaktisches oder ataktisches Homopolypropylen, Randomcopolymere von Propen mit Ethen und/oder Buten-1, Ethylen-Propylen-Blockcopolymere und dergleichen mehr. Derartige Polyolefine können auch eine Schlagzähkomponente wie z. B. EPModer EPDM-Kautschuk oder SEBS enthalten.

Geeignete Haftvermittler für Verbunde zwischen Polyolefin und Polyamid sind bekannt. Sie bestehen aus einer Polyolefinbasis, die mit geeigneten reaktiven Gruppen modifiziert ist. Die reaktiven Gruppen können hierbei entweder durch Copolymerisation zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

Als reaktive Gruppen geeignet sind z. B. Säureanhydridgruppen, Carbonsäuregruppen, Epoxidgruppen, Oxazolingruppen oder Trialkoxysilangruppen. Hiervon werden bevorzugt Säureanhydridgruppen verwendet. Besonders geeignet sind Haftvermittler mit 0,05 bis 10 Gew.-% Anhydridgruppen und insbesondere mit 0,2 bis 3 Gew.-% Anhydridgruppen. Bei Verwendung von Säureanhydridgruppen oder Carbonsäuregruppen ist es zum Erzielen einer guten Schichtenhaftung vorteilhaft, wenn das in der Schicht gemäß II. verwendete Polyamid einen gewissen Gehalt an Aminoendgruppen, vorzugsweise mindestens 10 mmol/kg an Aminoendgruppen, aufweist.

Geeignete Haftvermittler sind erhältlich u. a. unter den Handelsnamen BYNEL (DuPont), PRIMACOR (Dow), POLYBOND (BP), OREVAC (Elf), HERCOPRIME (Hercules), EPOLENE (Eastman), HOSTAMONT (Hoechst), EXXELOR (Exxon) und ADMER (Mitsui Petrochemical). Die Auswahl der Haftvermittler erfolgt nach den Kriterien, die dem Fachmann anhand der entsprechenden Produktbeschreibungen bekannt sind.

Den Formmassen für die Schichten gemäß I. bis IV. können übliche Hilfs- und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der thermoplastischen Mehrschichtverbunde kann ein- oder mehrstufig erfolgen.

Bei einem einstufigen Extrusionsverfahren werden in üblicher Weise die verschiedenen Schmelzen coextrudiert. Beim einstufigen Spritzgießverfahren bringt man die verschiedenen Schmelzen in einer Form zusammen und läßt das Formteil erkalten (Mehrkomponentenspritzguß).

Bei einem mehrstufigen Verfahren wird zunächst ein Formteil aus einer der Komponenten hergestellt und dann mit den übrigen Komponenten durch Pressen, Spritzgießen oder Extrudieren verbunden.

Die erfindungsgemäßen, thermoplastischen Mehrschichtverbunde können die Schichten I bis IV mehrmals enthalten.

Weiterhin können die erfindungsgemäßen thermoplastischen Mehrschichtverbunde zusätzlich andere Schichten als die Schichten I bis IV enthalten. Ein Beispiel sind Schichten aus EVOH oder Polyamid. So kann beispielsweise eine Schicht aus einer Polyamid-Formmasse zwischen den Schichten gemäß II. und III. angebracht sein.

Erfindungsgemäß sind auch Mehrschichtverbunde, die zusätzlich zu den Schichten I bis IV eine Regeneratschicht enthalten, d. h., eine Schicht, die ein Gemisch aus den Formmassen für die Schichten I bis IV darstellt. Das Regenerat für solche Regeneratschichten wird üblicherweise durch mechanisches Zerkleinern von entsprechenden Mehrschichtverbunden gewonnen, die bei der Herstellung der Mehrschichtverbunde sowie Form- und Fertigteilen hieraus als Abfall anfallen. Die mengenmäßige Zusammensetzung des Regenerats entspricht dann der Zusammensetzung des Mehrschichtverbundes. Das Regenerat kann aber auch mit geeigneten Komponenten, beispielsweise eine der Komponenten I bis IV, abgemischt werden. Zusammensetzung und Lage der Regeneratschicht sind so zu wählen, daß sie mit den benachbarten Schichten kraftschlüssig verbunden ist.

Beispiele für mögliche Schichtenanordnungen zeigt die folgende Tabelle.

**Tabelle 1:**

| Schichtenanordnung von erfindungsgemäßen, thermoplastischen Mehrschichtverbunden | |
|---|---|
| Schichtenanordnung Nr. | Ausführung |
| 1 | Schicht I |
| | Schicht II |
| | Schicht III |
| | Schicht IV |
| 2 | Schicht I |
| | Schicht II |
| | Schicht III |
| 3 | Schicht I |
| | Schicht II |
| | Schicht III |
| | Schicht IV |
| | Schicht III |
| | Schicht II |
| 4 | Schicht I |
| | Schicht II |
| | Schicht III |
| | Schicht IV |
| | Schicht III |
| | Schicht II |
| | Schicht I |
| 5 | Schicht IV |
| | Schicht III |
| | Schicht II |
| | Schicht I |
| | Schicht II |
| | Schicht III |
| | Schicht IV |
| 6 | Schicht IV |
| | Schicht III |
| | Schicht II |
| | Schicht I |
| | Schicht II |
| | Schicht III |
| 7 | Schicht IV |
| | Schicht III |
| | Regenerat |
| | Schicht III |
| | Schicht II |
| | Schicht I |
| | Schicht II |
| | Schicht III |
| 8 | Schicht IV |
| | Schicht III |
| | Schicht aus EVOH |
| | Schicht III |
| | Schicht II |
| | Schicht I |
| | Schicht II |
| | Schicht III |
| 9 | Schicht I |
| | Schicht II |
| | Schicht aus Polyamid-Formmasse |
| | Schicht III |
| | Schicht IV |

Einzelne Schichten der thermoplastischen Mehrschichtverbunde können elektrisch leitfähig eingestellt sein und einen Oberflächenwiderstand kleiner als 10⁹ Ohm aufweisen. Bei Hohlkörpern werden diese Schichten bevorzugt innenliegend eingesetzt.

Die Einstellung der elektrischen Leitfähigkeit erfolgt nach den bekannten Methoden. Beispielsweise setzt man bis zu 15 Gew.-% von z. B. Leitfähigkeitsruß, Kohlefasern, Graphitfasern o. ä. zu.

Die erfindungsgemäßen thermoplastischen Mehrschichtverbunde weisen in hervorragendem Maße eine gute Beständigkeit sowie Sperrwirkung hinsichtlich Diffusion gegenüber chemischen Agenzien, Lösemitteln und Kraftstoffen auf. Ferner sind die Schichten kraftschlüssig miteinander verbunden, so daß z. B. bei thermischer Ausdehnung oder Biegen des Fertigteils kein Abscheren der verschiedenen Schichten voreinander auftritt. Ebenso bleibt die gute Schichtenhaftung erhalten, wenn die erfindungsgemäßen Verbunde durch Thermoformen, Blasformen oder Verstrecken weiterbehandelt werden. Ferner ist es auch möglich, Teile herzustellen, welche die erfindungsgemäßen Mehrschichtverbunde mehrfach übereinander (alternierend) enthalten.

Die erfindungsgemäßen Mehrschichtverbunde finden bei Konstruktionsteilen vor allem im Bereich Elektro-, Maschinenbau- und Automobilindustrie dort Verwendung, wo beispielsweise die Sperrwirkung des Polyvinylidenfluorids mit den guten mechanischen Eigenschaften der Polyolefine und Polyamide kombiniert werden soll oder wo die nachteiligen Eigenschaften der Polyamide und Polyolefine, wie mangelnde UV-Beständigkeit, nicht ausreichende Kratzfestigkeit oder mangelnde chemische Beständigkeit, durch eine Beschichtung mit Polyvinylidenfluorid ausgeglichen werden sollen.

Beispiele für solche Anwendungen sind mehrschichtige Rohre zum Transport (petro)chemischer Stoffe, sowie auf dem Kraftfahrzeugsektor zum Durchleiten von Brems-, Kühl- und Hydraulikflüssigkeiten sowie Kraftstoff. Die Rohre können auch als Versorgungsleitungen beispielsweise im Tankstellenbereich verwendet werden. Eine andere Anwendung sind Trinkwasserleitungen, bei denen das Trinkwasser vor Diffusion von Schadstoffen von außen in das Trinkwasser hinein geschützt werden soll.

Weitere Anwendungen sind Hohlkörper, die beispielsweise durch Coextrusion und einen nachfolgenden Blasformprozeß hergestellt werden können. Diese finden u. a. Anwendung als Tanks, insbesondere Kraftstofftanks im Automobilsektor, Einfüllstutzen, insbesondere Kraftstoffeinfüllstutzen im Automobilsektor, sowie als Gehäuse für Filter, insbesondere Kraftstoffilter im Automobilbereich.

Die erfindungsgemäßen Verbunde können wegen der Kombination von guten mechanischen Eigenschaften und guter Sperrwirkung gegen Diffusion von Kraftstoffen insbesondere überall dort im Automobilsektor eingesetzt werden, wo Kontakt mit Kraftstoffen nicht ausgeschlossen werden kann.

Die genannten Parameter wurden mit Hilfe nachstehender Meßverfahren bestimmt.

Die Bestimmung des Melt Flow-Index der Polyglutarimide erfolgt bei 230 °C und unter einer Belastung von 3,8 kg (DIN 53 735).

Die Bestimmung des Melt Flow-Index der Polyvinylidenfluoride erfolgt bei 230 °C und unter einer Belastung von 5 kg (DIN 53 735).

Die Bestimmung der Lösungsviskosität (rel. Viskosität ηᵣₑₗ) der Polyamide erfolgt unter Verwendung einer 0,5 gew.-%igen m-Kresol-Lösung bei 25 °C gemäß DIN 53 727/ISO 307.

Zur Bestimmung der Aminoendgruppen wird 1 g der Polyamide in 50 ml m-Kresol bei 25 °C gelöst. Die Lösung wird mit Perchlorsäure potentiometrisch titriert.

Zur Bestimmung der Carboxylendgruppen in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/l) gegen Phenolphthalein bis zum Farbumschlag titriert.

Die Prüfung der mechanischen Trennbarkeit an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.

### Beispiele

### A. Komponente I.

- PVDF 1:: Polyvinylidenfluorid (Melt Flow-Index: 13 g/10 min., DYFLOR LE - HÜLS AG).
- PVDF 2:: Polyvinylidenfluorid (Melt Flow-Index: 8,5 g/10 min., DYFLOR EE - HÜLS AG).

### B. Komponente II.

Die für die Komponente II. b eingesetzten Polymere bestehen aus den weiter oben mit i) bis iv) gekennzeichneten Bausteinen, wobei Alkyl und R₁ bis R₅ jeweils Methyl bedeuten.

| Zusammensetzung der in den Beispielen eingesetzten Polymere: | | | |
|---|---|---|---|
| | P 1 | P 2 | P 3 |
| Gew.-% i) | 100 | 20 | 57 |
| Gew.-% ii) | 0 | 70 | 30 |
| Gew.-% iii) | 0 | 4 | 3 |
| Gew.-% iv) | 0 | 6 | 10 |
| Melt Flow-Index [g/10 min] | 0,8 | 0,4 | 0,4 |

Die Mischungen für die Komponente II wurden in einem Doppelschneckenkneter bei einer Massetemperatur von 270 °C hergestellt.
- Z 1:: Mischung aus
a: 70 Gew.-Tl. Polyamid 12 (ηᵣₑₗ : 2,1; Weichmachergehalt: 0; Aminoendgruppen: 40 mmol/kg; Carboxylendgruppen: 20 mmol/kg; VESTAMID X7296 - HÜLS AG)
   und
b: 30 Gew.-Tl. P1 (Polymethylmethacrylat).
- Z 2:: Mischung aus
a: 60 Gew.-Tl. Polyamid 12 (ηᵣₑₗ : 2,1; Weichmachergehalt:
   15 Gew.-%; Aminoendgruppen: 40 mmol/kg; Carboxylendgruppen:
   20 mmol/kg; VESTAMID X7297 - HÜLS AG)
   und
b: 40 Gew.-Tl. P2.
- Z 3:: Mischung aus
a: 70 Gew.-Tl. Polyamid 12 (ηᵣₑₗ : 2,1; Weichmachergehalt:
   0; Aminoendgruppen: 40 mmol/kg; Carboxylendgruppen:
   20 mmol/kg; VESTAMID X7296 - HÜLS AG)
   und
b: 30 Gew.-Tl. P3.

### C. Eingesetzte Haftvermittler (Komponente III.):

- HV 1:: Formmasse auf Basis von Polyethylen (LDPE), modifiziert mit Maleinsäureanhydrid, so daß die Formmasse 0,4 Gew.-% Anhydridgruppen enthält.
- HV 2:: Formmasse auf Basis von Ethylen-Vinylacetat-Copolymer, modifiziert mit Maleinsäureanhydrid, so daß die Formmasse mehr als 0,1 Gew.-% Anhydridgruppen enthält.
- HV 3:: Anhydridmodifiziertes Copolymer aus Ethylen und Propylen; ADMER® L2100 - Mitsui.
- HV 4:: Anhydridmodifiziertes Copolymer aus Ethylen und Methylacrylat; BYNEL® CXAE 374 - DUPONT.
- HV 5:: Anhydridmodifiziertes Polyethylen; BYNEL® CXA 4001 - DUPONT.

### D. Eingesetzte Polyolefine (Komponente IV.):

- P0 1:: Polyethylen hoher Dichte (HDPE); MFI (190/5) = 0,8 g/10 min; VESTOLEN A 4042 R - HÜLS AG).
- P0 2:: Polyethylen hoher Dichte (HDPE); MFI (190/5) = 0,5 g/10 min; VESTOLEN A 5041 R - HÜLS AG).

### E. Herstellung der thermoplastischen Mehrschichtverbunde

Es wurden sowohl mehrschichtige Preßplatten als auch mehrschichtige Rohre hergestellt.

Die Herstellung der Preßplatten erfolgte in einer Laborpresse bei 270 °C und mit einer Preßzeit von 5 min. Die Schichtdicke betrug jeweils 1 mm, d. h. zweischichtige Preßplatten hatten insgesamt eine Dicke von 2 mm, dreischichtige Preßplatten eine Dicke von 3 mm und fünfschichtige Preßplatten entsprechend eine Dicke von 5 mm.

Die Rohre wurden auf einer Laborcoextrusionsanlage mit einem Fünfschichtwerkzeug hergestellt (bei der Herstellung von Rohren mit weniger als fünf Schichten bleibt die entsprechende Anzahl an Kanälen geschlossen). Die Zylindertemperaturen lagen bei 250 °C (PVDF 1, PVDF 2, Z 1, Z 2, Z 3) und 220 °C (HV 1, HV 2, HV 3, HV 4, HV 5, PO 1, PO 2).

Es wurden Rohre mit 8 mm Außendurchmesser und einer Gesamtwandstärke von 1 mm hergestellt.

**Tabelle 2:**

| Mehrschichtige Preßplatten | | | | | | |
|---|---|---|---|---|---|---|
| Versuch Nr. | Schichtenfolge | | | | An der Grenzfläche mechanisch trennbar nach Lagerung | |
| | I. | II. | III. | IV. | bei 23 °C | in M15*) |
| A | PVDF 1 | | | PO 1 | ja, PVDF 1 von PO 1 | ja, PVDF 1 von PO 1 |
| B | PVDF 2 | Z 1 | | PO 1 | ja, Z 1 von PO 1 und Z 1 von PVDF 2 | ja, Z 1 von PO 1 und Z 1 von PVDF 2 |
| C | PVDF 1 | | HV 3 | PO 2 | ja, PVDF 1 von HV 3 | ja, PVDF 1 von HV 3 |
| D | PVDF 1 | Z 3 | | PO 2 | ja, Z 3 von PO 2 | ja, Z 3 von PO 2 |
| E | PVDF 1 | Z 1 | HV 3 | PO 1 | ja, PVDF 1 von Z 1 und Z 1 von HV 3 | ja, PVDF 1 von Z 1 und Z 1 von HV 3 |
| 1 | PVDF 1 | Z 2 | HV 1 | PO 1 | nein | nein |
| 2 | PVDF 2 | Z 3 | HV 2 | PO 1 | nein | nein |
| 3 | PVDF 1 | Z 2 | HV 3 | PO 1 | nein | nein |
| 4 | PVDF 1 | Z 2 | HV 4 | PO 2 | nein | nein |
| 5 | PVDF 2 | Z 3 | HV 5 | PO 2 | nein | nein |

| | | | | | | |
|---|---|---|---|---|---|---|
| *) Lagerung bei 23 °C während 5 Tagen in Normalkraftstoff M15 (42,5 Vol.-% Isooctan, 42,5 Vol.-% Toluol und 15 Vol.-% Methanol) | | | | | | |

**Tabelle 3:**

| Mehrschichtige Rohre | | | |
|---|---|---|---|
| Versuch Nr. | Schichtaufbau von außen nach innen | An der Grenzfläche mechanisch trennbar nach Lagerung | |
| | | bei 23 °C | in M15*) |
| F | 0,1 mm PVDF 1 | ja | ja |
| | 0,7 mm PO 1 | | |
| G | 0,7 mm PO 1 | ja, | ja, |
| | 0,1 mm HV 1 | HV 1 von | HV 1 von |
| | 0,2 mm PVDF 1 | PVDF 1 | PVDF 1 |
| H | 0,7 mm P0 1 | ja, | ja, |
| | 0,1 mm HV 4 | Z 1 von | Z 1 von |
| | 0,1 mm Z 1 | PVDF 1 | PVDF 1 |
| | 0,1 mm PVDF 1 | | |
| 6 | 0,2 mm PVDF 1 | | |
| | 0,1 mm Z 2 | nein | nein |
| | 0,1 mm HV 3 | | |
| | 0,6 mm PO 1 | | |
| 7 | 0,7 mm PO 1 | | |
| | 0,1 mm HV 4 | nein | nein |
| | 0,1 mm Z 3 | | |
| | 0,1 mm PVDF 1 | | |
| 8 | 0,6 mm PO 2 | | |
| | 0,1 mm HV 4 | nein | nein |
| | 0,1 mm Z 2 | | |
| | 0,1 mm PVDF 1 | | |
| | 0,1 mm Z 2 | | |

| | | | |
|---|---|---|---|
| *) Lagerung bei 23 °C während 5 Tagen in Normalkraftstoff M15 (42,5 Vol.-% Isooctan, 42,5 Vol.-% Toluol und 15 Vol.-% Methanol) | | | |

## Patentansprüche

1. Thermoplastischer Mehrschichtverbund, enthaltend mindestens
I. eine Schicht aus einer Polyvinylidenfluorid-Formmasse,
II. eine zur Schicht gemäß I. direkt benachbarte Schicht aus einer Formmasse auf Basis eines Gemisches aus
a. Polyamid
und
b. Polyglutarimid,
III. eine Schicht aus einem geeigneten Haftvermittler, der Säureanhydridgruppen, Carbonsäuregruppen, Epoxidgruppen, Oxazolingruppen oder Trialkoxysilangruppen als reaktive Gruppen enthält
und
IV. eine zur Schicht gemäß III. direkt benachbarte Schicht aus einer Polyolefin-Formmasse,
wobei benachbarte Schichten fest miteinander verbunden sind.

2. Thermoplastischer Mehrschichtverbund gemäß Anspruch 1,
**dadurch gekennzeichnet,**
**daß** die Schicht gemäß I. aus einer Formmasse auf Basis eines Polyvinylidenfluorids mit einem Melt Flow-Index von < 17 g/10 min. besteht.

3. Thermoplastischer Mehrschichtverbund gemäß einem der Ansprüche 1 oder 2,
**dadurch gekennzeichnet,**
**daß** die Schicht gemäß I. aus einer Formmasse auf Basis eines Polyvinylidenfluorids mit einem Melt Flow-Index von 2 bis 13 g/10 min. besteht.

4. Thermoplastischer Mehrschichtverbund gemäß einem der vorhergehenden Ansprüche,
**dadurch gekennzeichnet,**
**daß** die Schicht gemäß I. aus einer Formmasse auf Basis eines Polyvinylidenfluoridcopolymeren besteht.

5. Thermoplastischer Mehrschichtverbund gemäß einem der vorhergehenden Ansprüche,
**dadurch gekennzeichnet,**
**daß** die Schicht gemäß II. aus einer Formmasse auf Basis eines Gemisches aus
a. 40 bis 90 Gew.-% eines Polyamids
und
b. 10 bis 60 Gew.-% eines Polyglutarimids
besteht.

6. Thermoplastischer Mehrschichtverbund gemäß einem der vorhergehenden Ansprüche,
**dadurch gekennzeichnet,**
**daß** die Schicht gemäß II. aus einer Formmasse auf Basis eines Gemisches aus
a. 60 bis 80 Gew.-% eines Polyamids
und
b. 20 bis 40 Gew.-% eines Polyglutarimids
besteht.

7. Thermoplastischer Mehrschichtverbund gemäß einem der vorhergehenden Ansprüche,
**dadurch gekennzeichnet,**
**daß** die Komponente II.b. mindestens nachstehende Grundbausteine enthält:
i) maximal 98,8 Gew.-% 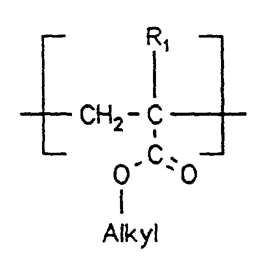
ii) maximal 98,8 Gew.-% 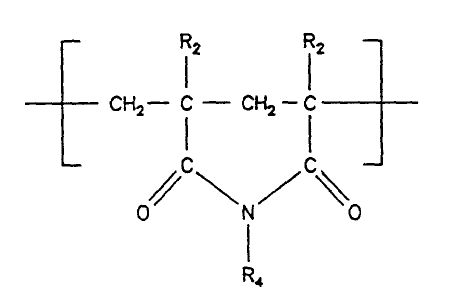
iii) < 20 Gew.-% 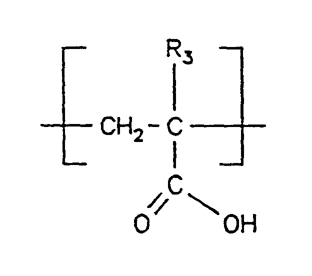
iv) 1,2 bis 20 Gew.-% 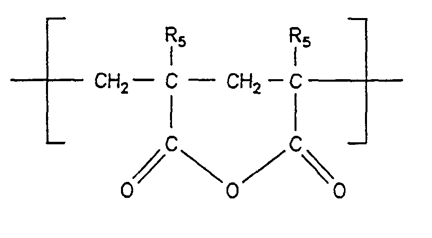
wobei Alkyl = Methyl, Ethyl, Propyl, Butyl, Pentyl, Hexyl und R₁ bis R₅ = (CₙH₂ₙ₊₁)
mit n = 0 bis 6 bedeuten und die Substituenten gleich oder verschieden sein können.

8. Thermoplastischer Mehrschichtverbund gemäß einem der vorhergehenden Ansprüche,
**dadurch gekennzeichnet,**
**daß** die Komponente II.b. mindestens nachstehende Grundbausteine enthält:
i) 10 bis 60 Gew.-% 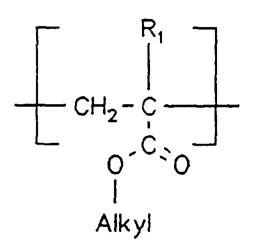
ii) 30 bis 80 Gew.-% 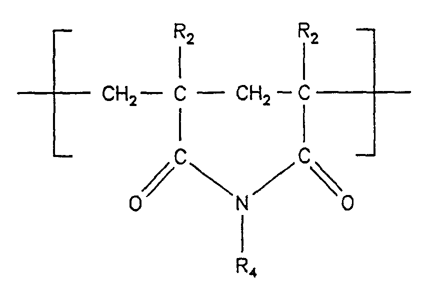
iii) 2 bis 10 Gew-% 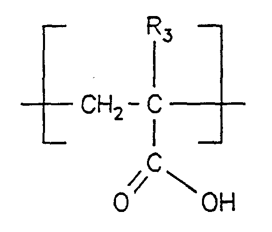
iv) 1,5 bis 12 Gew.-% 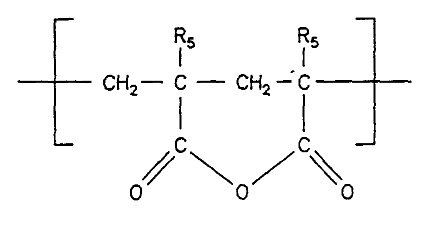
wobei Alkyl = Methyl, Ethyl, Propyl, Butyl, Pentyl, Hexyl und R₁ bis R₅ = (CₙH₂ₙ₊₁)
mit n = 0 bis 6 bedeuten und die Substituenten gleich oder verschieden sein können.

9. Thermoplastischer Mehrschichtverbund gemäß einem der Ansprüche 1 bis 7,
**dadurch gekennzeichnet,**
**daß** die Komponente II.b. nachstehenden Grundbaustein enthält:
iv) 2 bis 10 Gew.-% 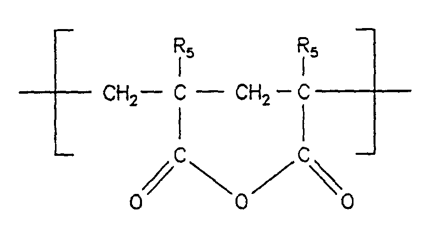
wobei R₅ = (CₙH₂ₙ₊₁) mit n = 0 bis 6 bedeutet.

10. Thermoplastischer Mehrschichtverbund gemäß einem der Ansprüche 7 bis 9,
**dadurch gekennzeichnet,**
**daß** Alkyl sowie R₁ bis R₅ eine Methylgruppe darstellen.

11. Thermoplastischer Mehrschichtverbund gemäß einem der vorhergehenden Ansprüche,
**dadurch gekennzeichnet,**
**daß** die Schicht IV. aus einer Formmasse auf Basis von Polyethylen oder Polypropylen besteht.

12. Thermoplastischer Mehrschichtverbund gemäß einem der vorhergehenden Ansprüche,
**dadurch gekennzeichnet,**
**daß** der Haftvermittler der Schicht III. 0,05 bis 10 Gew.-% und bevorzugt 0,2 bis 3 Gew.-% Säureanhydridgruppen enthält.

13. Thermoplastischer Mehrschichtverbund gemäß Anspruch 12,
**dadurch gekennzeichnet,**
**daß** in der Schicht gemäß II. das Polyamid einen Aminoendgruppengehalt von mindestens 10 mmol/kg hat.

14. Thermoplastischer Mehrschichtverbund gemäß einem der vorhergehenden Ansprüche,
**dadurch gekennzeichnet,**
**daß** das Polyamid der Komponente II.a. Polyamid 12 darstellt.

15. Thermoplastischer Mehrschichtverbund gemäß einem der vorhergehenden Ansprüche,
**dadurch gekennzeichnet,**
**daß** er mehr als eine Schicht I, Schicht II, Schicht III und/oder Schicht IV enthält.

16. Thermoplastischer Mehrschichtverbund gemäß einem der vorhergehenden Ansprüche,
**dadurch gekennzeichnet,**
**daß** er folgende Schichtenanordnung aufweist:
Schicht IV.
Schicht III.
Schicht II.
Schicht I.
Schicht II.
Schicht III.
Schicht IV.

17. Verwendung des thermoplastischen Mehrschichtverbundes nach den Ansprüchen 1 bis 16 zur Herstellung von Formteilen.

18. Verwendung des thermoplastischen Mehrschichtverbundes nach den Ansprüchen 1 bis 16 zur Herstellung von Hohlprofilen.

19. Verwendung des thermoplastischen Mehrschichtverbundes nach den Ansprüchen 1 bis 16 zur Herstellung von mehrschichtigen Rohren.

20. Verwendung des thermoplastischen Mehrschichtverbundes nach den Ansprüchen 1 bis 16 zur Herstellung von Einfüllstutzen, Tankbehältern und Kraftstoffiltern im Kraftfahrzeugsektor.

## Claims

1. A thermoplastic multilayer composite containing at least
I. a layer of a polyvinylidene fluoride moulding composition,
II.a layer directly adjacent to the layer I. and comprising a moulding composition based on a mixture of
a. polyamide
and
b. polyglutarimide,
III. a layer of a suitable coupling agent containing acid anhydride groups, carboxylic acid groups, epoxide groups, oxazoline groups or trialkoxysilane groups as reactive groups and
IV. a layer directly adjacent to the layer III. and comprising a polyolefin moulding composition,
with adjacent layers being firmly bonded to one another.

2. A thermoplastic multilayer composite according to claim 1, **characterized in that** the layer I. comprises a moulding composition based on a polyvinylidene fluoride having a melt flow index of < 17 g/10 min.

3. A thermoplastic multilayer composite according to either one of claims 1 and 2, **characterized in that** the layer I. comprises a moulding composition based on a polyvinylidene fluoride having a melt flow index of from 2 to 13 g/10 min.

4. A thermoplastic multilayer composite according to any one of the preceding claims, **characterized in that** the layer I. comprises a moulding composition based on a polyvinylidene fluoride copolymer.

5. A thermoplastic multilayer composite according to any one of the preceding claims, **characterized in that** the layer II. comprises a moulding composition based on a mixture of
a. from 40 to 90% by weight of a polyamide
and
b. from 10 to 60% by weight of a polyglutarimide.

6. A thermoplastic multilayer composite according to any one of the preceding claims, **characterized in that** the layer II. comprises a moulding composition based on a mixture of
a. from 60 to 80% by weight of a polyamide
and
b. from 20 to 40% by weight of a polyglutarimide.

7. A thermoplastic multilayer composite according to any one of the preceding claims, **characterized in that** the component II.b. contains at least the following basic building blocks:
i) a maximum of 98.8% by weight of 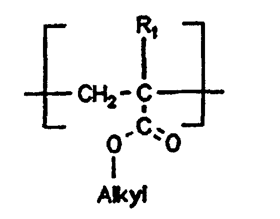
ii)a maximum of 98.8% by weight of 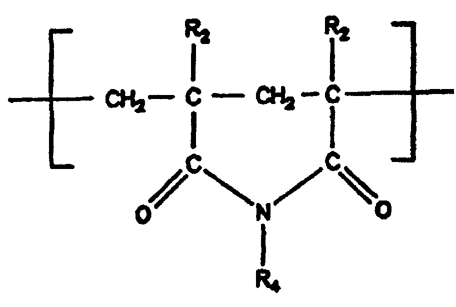
iii) <20% by weight of 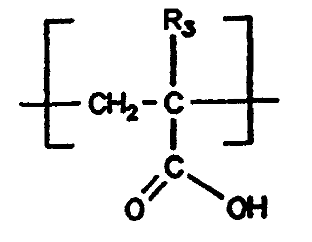
iv) from 1.2 to 20% by weight of 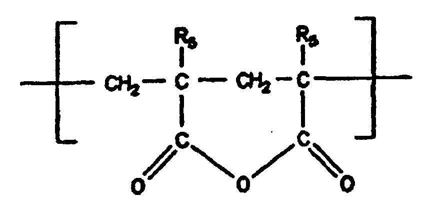
where Alkyl = methyl, ethyl, propyl, butyl, pentyl, hexyl
and R₁ to R₅ = (CₙH₂ₙ₊₁)
where n = 0 to 6 and the substituents can be identical or different.

8. A thermoplastic multilayer composite according to any one of the preceding claims, **characterized in that** the component II.b. contains at least the following basic building blocks:
i) from 10 to 60% by weight of 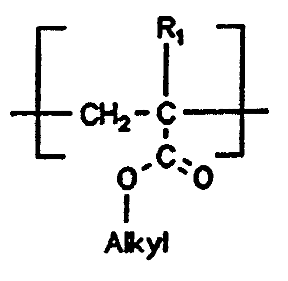
ii) from 30 to 80% by weight of 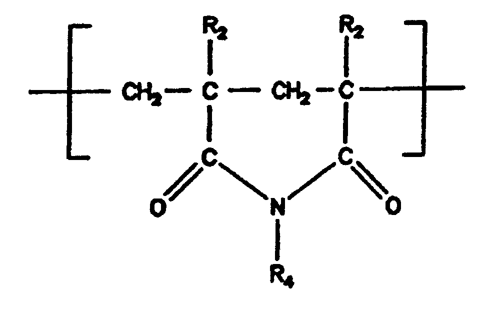
iii) from 2 to 10% by weight of 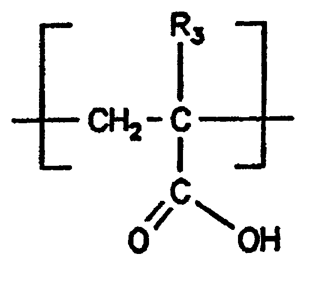
iv)from 1.5 to 12% by weight of 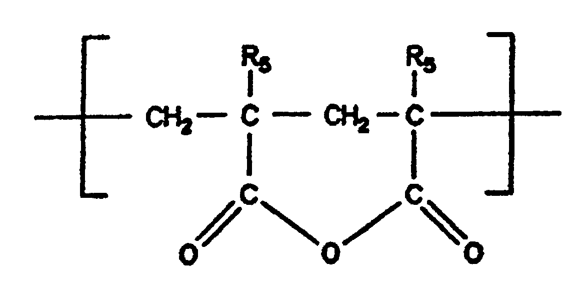
where Alkyl = methyl, ethyl, propyl, butyl, pentyl, hexyl
and R₁ to R₅ = (CₙH₂ₙ₊₁)
where n = 0 to 6 and the substituents can be identical or different.

9. A thermoplastic multilayer composite according to any one of claims 1 to 7, **characterized in that** the component II.b. contains the following basic building block:
iv)from 2 to 10% by weight of 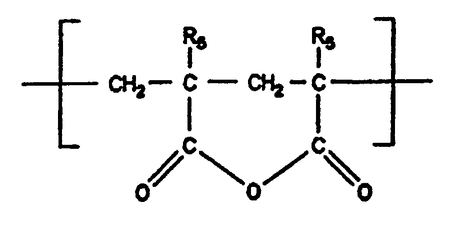
where R₅ = (CₙH₂ₙ₊₁) with n = 0 to 6.

10. A thermoplastic multilayer composite according to any one of claims 7 to 9, **characterized in that** Alkyl and R₁ to R₅ are each a methyl group.

11. A thermoplastic multilayer composite according to any one of the preceding claims, **characterized in that** the layer IV. comprises a moulding composition based on polyethylene or polypropylene.

12. A thermoplastic multilayer composite according to any one of the preceding claims, **characterized in that** the coupling agent of the layer III. contains from 0.05 to 10% by weight and preferably from 0.2 to 3% by weight of acid anhydride groups.

13. A thermoplastic multilayer composite according to claim 12, **characterized in that** the polyamide in the layer II. has an amino end group content of at least 10 mmol/kg.

14. A thermoplastic multilayer composite according to any one of the preceding claims, **characterized in that** the polyamide of the component II.a. is polyamide 12.

15. A thermoplastic multilayer composite according to any one of the preceding claims, **characterized in that** it contains more than one layer I, layer II, layer III and/or layer IV.

16. A thermoplastic multilayer composite according to any one of the preceding claims, **characterized in that** it has the following layer arrangement:
Layer IV.
Layer III.
Layer II.
Layer I.
Layer II.
Layer III.
Layer IV.

17. The use of the thermoplastic multilayer composite according to any of claims 1 to 16 for producing mouldings.

18. The use of the thermoplastic multilayer composite according to any of claims 1 to 16 for producing hollow profiles.

19. The use of the thermoplastic multilayer composite according to any of claims 1 to 16 for producing multilayer pipes.

20. The use of the thermoplastic multilayer composite according to any of claims 1 to 16 for producing filling ports, tanks and fuel filters in the motor vehicle sector.

## Revendications

1. Composite à plusieurs couches thermoplastique qui contient au moins :
I) une couche en masse moulée de fluorure de polyvinylidène,
II) une couche directement voisine à la couche selon I, en une masse moulée à base d'un mélange à base de :
a) un polyamide, et
b) un polyglutarimide
III) une couche en un adjuvant d'adhésion approprié qui renferme comme groupes réactifs des groupes anhydrides d'acide, des groupes acide carboxylique, des groupes époxyde, des groupes oxazoline, ou des groupes trialkoxysilane, et
IV) une couche directement voisine à la couche selon III, en une masse moulée en polyoléfine, les couches voisines étant fermement assemblées les unes avec les autres.

2. Composite à plusieurs couches thermoplastique selon la revendication 1,
**caractérisé en ce que**
la couche selon I consiste en une masse moulée à base d'un fluorure de polyvinylidène ayant un indice de coulée par fusion (melt-Flow) < 17 g/10 mn.

3. Composite à plusieurs couches thermoplastique selon l'une quelconque des revendications 1 ou 2,
**caractérisé en ce que**
la couche conformément à I, consiste en une masse moulée à base d'un fluorure de polyvinylidène ayant un indice de coulée par fusion de 2 à 13 g/10 mn.

4. Composite à plusieurs couches thermoplastique selon l'une quelconque des revendications précédentes,
**caractérisé en ce que**
la couche selon I, consiste en une masse moulée à base de copolymère de fluorure de polyvinylidène.

5. Composite à plusieurs couches thermoplastique selon l'une quelconque des revendications précédentes,
**caractérisé en ce que**
la couche selon II consiste en une masse moulée à base d'un mélange de:
a) de 40 à 90 % en poids d'un polyamide, et
b) de 10 à 60 % en poids d'un polyglutarimide.

6. Composite à plusieurs couches thermoplastique selon l'une quelconque des revendications précédentes,
**caractérisé en ce que**
la couche selon II, consiste en une masse moulée à base d'un mélange en :
a) de 60 à 80 % en poids d'un polyamide
b) de 20 à 40 % en poids d'un polyglutarimide.

7. Composite à plusieurs couches thermoplastique selon l'une quelconque des revendications précédentes,
**caractérisé en ce que**
le composé IIb) renferme au moins des éléments constitutifs de base suivants :
i) au maximum 98,8 % en poids de : 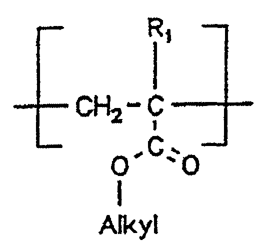
ii) au maximum 98,8 % en poids de : 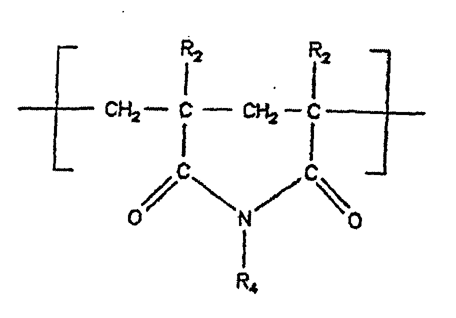
iii) < 20 % en poids de : 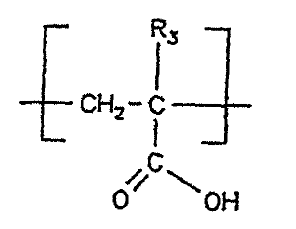
iv) de 1,2 20 % en poids de : 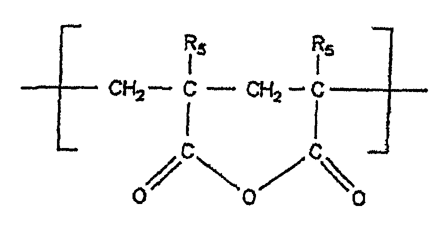
dans lesquelles alkyle = méthyle, éthyle, propyle, butyle, pentyle, hexyle et R₁ à R₅ = (CₙH₂ₙ₊₁)
avec n = O à 6 et les substituants peuvent être identiques ou différents.

8. Composite à plusieurs couches thermoplastique selon l'une quelconque des revendications précédentes,
**caractérisé en ce que**
le composant IIb) renferme au moins des éléments constitutifs de base suivants :
i) de 10 à 60 % en poids de : 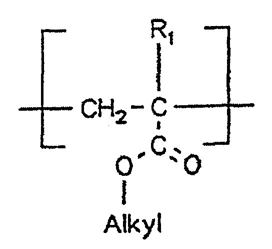
ii) de 30 à 80 % en poids de : 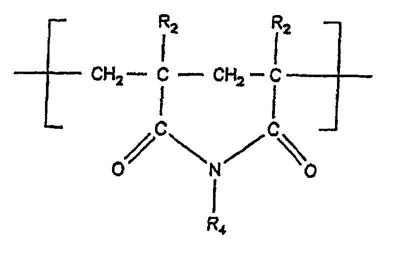
iii) de 2 à 10 % en poids de : 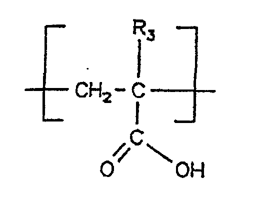
iv) de 1,5 à 12 % en poids de : 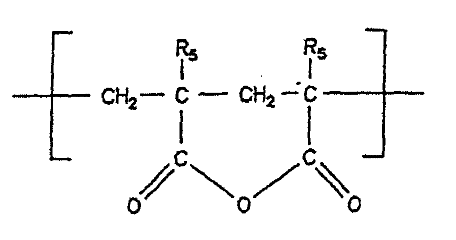
dans lesquelles alkyle = méthyle, éthyle, propyle, butyle, pentyle, hexyle, et R₁ à R₅ signifient = (CₙH₂ₙ₊₁) avec n = O à 6 et les substituants peuvent être identiques ou différents.

9. Composite à plusieurs couches thermoplastique selon l'une quelconque des revendications 1 à 7,
**caractérisé en ce que**
le composant IIb) renferme les éléments constitutifs de base suivants :
iv) de 2 à 10 % en poids de : 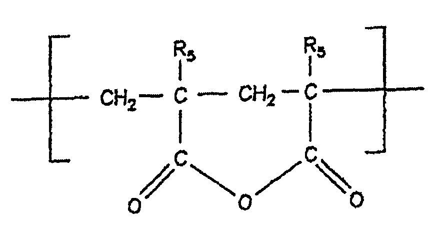
dans laquelle R₅ signifie (CₙH₂ₙ₊₁) avec n = 0 à 6.

10. Composite à plusieurs couches thermoplastique selon l'une quelconque des revendications 7 à 9,
**caractérisé en ce que**
les substituants alkyle ainsi que R₁ à R₅ représentent un groupe méthyle.

11. Composite à plusieurs couches thermoplastique selon l'une quelconque des revendications précédentes,
**caractérisé en ce que**
la couche IV consiste en une masse moulée à base de polyéthylène ou de polypropylène.

12. Composite à plusieurs couches thermoplastique selon l'une quelconque des revendications précédentes,
**caractérisé en ce que**
l'adjuvant d'adhésion de la couche III renferme de 0,05 à 10 % en poids et de préférence de 0,2 à 3 % en poids de groupes anhydride d'acide.

13. Composite à plusieurs couches thermoplastique selon la revendication 12,
**caractérisé en ce que**
dans la couche selon II le polyamide à une teneur en groupe amine terminale d'au moins 10 mmol/Kg.

14. Composite à plusieurs couches thermoplastique selon l'une quelconque des revendications précédentes,
**caractérisé en ce que**
le polyamide du composant IIa) présente du polyamide 12.

15. Composite à plusieurs couches thermoplastique selon l'une quelconque des revendications précédentes,
**caractérisé en ce qu'**
il renferme plus d'une couche I, couche II, couche III et/ou couche IV.

16. Composite à plusieurs couches thermoplastique selon l'une quelconque des revendications précédentes,
**caractérisé en ce qu'**
il possède la disposition de couches suivantes :
couche IV
couche III
couche II
couche I
couche II
couche III
couche IV

17. Utilisation du composite à plusieurs couches thermoplastique selon les revendications 1 à 16 pour la production de pièces moulées.

18. Utilisation du composite à plusieurs couches thermoplastique selon les revendications 1 à 16 pour la production de profilés creux.

19. Utilisation du composite à plusieurs couches thermoplastique selon les revendications 1 à 16 pour la production de tubes multicouches.

20. Utilisation du composite à plusieurs couches thermoplastique selon les revendications 1 à 16 pour la production de tubulures de remplissage, de réservoirs de ravitaillement, et de filtres pour carburants dans le secteur de l'automobile.
